# EUROPÄISCHE PATENTSCHRIFT

(11) **EP 2 103 193 B1**
(45) Veröffentlichungstag und Bekanntmachung des Hinweises auf die Patenterteilung: **20.10.2010**
(21) Anmeldenummer: 06841407.7
(22) Anmeldetag: 18.12.2006
(51) Int. Cl.: H05B 41/288, H04N 9/31

(54) **SCHALTUNGSANORDNUNG UND VERFAHREN ZUM BETREIBEN EINER HOCHDRUCKENTLADUNGSLAMPE**
CIRCUIT ARRANGEMENT AND METHOD FOR OPERATING A HIGH-PRESSURE DISCHARGE LAMP
MONTAGE ÉLECTRIQUE ET PROCÉDÉ POUR FAIRE FONCTIONNER UNE LAMPE À DÉCHARGE À HAUTE PRESSION

(43) Veröffentlichungstag der Anmeldung: 23.09.2009
(73) Patentinhaber: Osram Gesellschaft mit beschränkter Haftung, 81543 München (DE)
(72) Erfinder: HUBER, Andreas, 82216 Maisach (DE); HONSBERG-RIEDL, Martin, 83317 Teisendorf (DE); ULRICH, Burkhard, 72667 Schlaitdorf (DE); LANKES, Simon, 14612 Falkensee (DE)
(86) Internationale Anmeldenummer: PCT/EP2006/069812
(87) Internationale Veröffentlichungsnummer: WO 2008/074360

(56) Entgegenhaltungen:
- WO-A-2004/057931
- WO-A-2006/056926
- WO-A-2006/114742

## Beschreibung

### Technisches Gebiet

Die vorliegende Erfindung betrifft eine Schaltungsanordnung zum Betreiben einer Hochdruckentladungslampe mit einem elektronischen Vorschaltgerät, das ausgelegt ist, ein AC-Speisesignal für die Hochdruckentladungslampe bereitzustellen, das im Zeitbereich als Modulationsperiode eine serielle Abfolge zumindest eines ersten, eines zweiten und eines dritten Signalabschnitts umfasst, die einer ersten, einer zweiten und einer dritten Farbe zugeordnet sind. Sie betrifft überdies eine Projektionsvorrichtung mit einer entsprechenden Schaltungsanordnung sowie ein entsprechendes Verfahren zum Betreiben einer Hochdruckentladungslampe.

### Stand der Technik

Hochdruckentladungslampen, wie sie beispielsweise als Video-Projektionslampen verwendet werden, weisen üblicherweise zwei gleichartige Elektroden auf, die meist stabförmig ausgebildet sind. Beim Betrieb derartiger Hochdruckentladungslampen mit Wechselstrom kann es zu sehr störenden Flackererscheinungen kommen. Diese entstehen durch wechselndes Springen des Ansatzpunktes des Lichtbogens an den Elektrodenspitzen. Ermöglicht wird dies durch den häufigen Wechsel der Elektrodenfunktion von der anodischen (positive Polarität) zur kathodischen Phase (negative Polarität) mit der Betriebsfrequenz. Ein solches Springen des Lichtbogenansatzes beeinträchtigt insbesondere die Anwendung von Hochdruckentladungslampen in optischen Geräten, beispielsweise Projektionsgeräten, Beamern, Mikroskopbeleuchtungen, und kann bis zur Unbrauchbarkeit bei der Anwendung führen.

Aus der US 5,608,294 ist für einen niederfrequenten (50 Hz bis zu einigen 100 Hz) Betrieb einer Hochdruckentladungslampe bekannt, den rechteckförmigen Lampenstromverlauf zur Stabilisierung, d. h. zur Verhinderung des Springens des Ansatzpunktes des Lichtbogens, mit kurzen synchronen Pulsen zu überlagern. Hierbei wird der Strom am Ende einer halben Periode vor der folgenden Kommutierung kurzfristig erhöht. Gemäß der genannten Druckschrift führt der Stromimpuls vor der Kommutierung zu einer kurzzeitigen Temperaturerhöhung an den stromführenden Ansatzstellen des Lichtbogens an den Elektroden, hauptsächlich der momentanen Anode. Als Folge stellt sich eine Materialanlagerung (Elektrodenreformation) ein, d. h. das Elektrodenmetall Wolfram aus dem Gaskreisprozess wird aus den Wolframhalogeniden auf den Elektroden abgeschieden, sowie eine Spitzenbildung auf den Elektroden, welche die Entladung und den Ansatz des Lichtbogens sehr effektiv stabilisiert.

Aus der WO 03/098979 A1 ist der Betrieb einer Hochdruckentladungslampe mit einem unmodulierten HF-Signal von mehr als 3 MHz bekannt. Generell lassen Hochdruckentladungslampen einen erfolgreichen HF-Betrieb erst ab Frequenzen zu, die oberhalb der akustischen Resonanzen in der Brennkammer liegen. Diese akustischen Resonanzen führen zu starken Strömungen in der Brennkammer, die den Entladungsbogen im Allgemeinen deutlich stören. Allerdings gibt es in der Literatur Ansätze, die akustischen Resonanzen durch geeignete Speiseströme zu dämpfen oder ganz zu vermeiden. Beispielhaft wird verwiesen auf die DE 10 2005 028 417.5 sowie die DE 10 2005 059 763.7. Derartige Lösungen sind jedoch meist recht aufwändig.

Schließlich wird verwiesen auf die DE 198 29 600 A1, die sich mit dem HF-Betrieb einer Hochdruckentladungslampe beschäftigt. Sie betrifft insbesondere ebenfalls die Problematik des Springens des Ansatzes des Lichtbogens auf den Elektrodenspitzen. Sie schlägt als Lösung, ausgehend von einem Stand der Technik, bei dem die Hochdruckentladungslampen mit einer Frequenz unter 2 kHz betrieben wurden, vor, die Lampe mit einer Frequenz über 800 kHz, vorzugsweise über 1 MHz und besonders bevorzugt zwischen 2 und 3 MHz, zu betreiben. In einer bevorzugten Weiterbildung wird die Betriebsfrequenz sowohl stetig als auch sprunghaft mit einer Modulationsfrequenz von weniger als 10 kHz, bevorzugt zwischen 1 und 2 kHz, gewobbelt. Wenngleich dies unter Umständen für gewisse Hochdruckentladungslampen eine Lösung darstellen kann, so erwies sich diese Maßnahme jedoch bei dem von den Erfindern der vorliegenden Erfindung untersuchten Hochdruckentladungslampen als wirkungslos.

Die grundsätzliche Lösung, ein Springen des Ansatzes des Lichtbogens auf den Elektrodenspitzen bei HF-Betrieb einer Hochdruckentladungslampe zuverlässig zu verhindern, kann der nachveröffentlichten Patentanmeldung PCT/EP2006/068269 derselben Anmelderin wie die vorliegende Anmeldung entnommen werden. Sie besteht darin, dass das elektronische Vorschaltgerät weiterhin ausgelegt ist, das AC-Speisesignal in der Amplitude zu modulieren.

Auch aus der WO 2004/057931 A1 ist ein Betriebsverfahren bekannt, bei der eine Hochdruckentladungslampe mit einem hochfrequenten, amplitudenmodulierten Signal betrieben wird, und die Modulationstiefe über die Standardabweichung der Lampenspannung eingestellt wird.

Die vorliegende Anmeldung zielt auf einen bevorzugten Einsatzbereich derartiger Hochdruckentladungslampen ab: Unter dem Begriff DLP (Digital Light Processing) ist eine Technik bekannt, die in Video-Projektoren und Rückprojektions-Fernsehern verwendet wird. Sie basiert auf mikroskopisch kleinen Spiegeln, die auf einem DMD-Chip (Digital Micromirror Device) angebracht sind. Dabei sind die Spiegel kleiner als ein Fünftel der Breite eines menschlichen Haares. Sie besitzen zwei stabile Endzustände, zwischen denen sie in einer bevorzugten Ausführungsform innerhalb von 16 µs wechseln können. Die Bewegung wird durch die Kraftwirkung elektrostatischer Felder hervorgerufen. Durch die Neigung der einzelnen Mikro-Spiegel auf dem DMD-Chip wird das Licht entweder direkt zur Optik reflektiert oder zu einem Absorber geleitet. Durch pulsweitenmodulierte Ansteuerung der Spiegel können verschiedene Helligkeitsstufen der einzelnen Bildpunkte erzeugt werden.

DMD-Chips mit einer XGA-Bildauflösung von 1024 x 768 enthalten eine Anordnung von 786.432 winzigen Spiegeln. Mittlerweile sind DMD-Chips mit Auflösungen bis zu 2048 x 1080 erhältlich, also ca. zwei Millionen Spiegeln.

Da die DMD-Chips das weiße Licht einer Projektionslampe reflektieren, sind für ein farbiges Bild zusätzliche Schritte erforderlich. Bei einem 1-Chip-Projektor wird in den Lichtweg vor dem DMD-Chip ein Farbrad geschaltet, auf dem Farbfilter der Grundfarben (in der Regel die Farben Rot, Grün und Blau, teilweise aber auch noch weitere Farben) rotieren. Um bessere Helligkeitswerte im Weißen zu erreichen, wird dem Farbrad auch noch Weiß hinzugefügt. Mit der Position des Farbfilters wechselt die Elektronik das Teilbild, das vom DMD reflektiert wird. Aufgrund der Drehgeschwindigkeit des Farbrads und der Trägheit des menschlichen Auges werden die Teilbilder zu einem farbigen Bild-Eindruck addiert. Da die Erkennungs-Frequenz von Mensch zu Mensch verschieden ist, gab es vor allem bei den ersten Modellen Berichte über einen so genannten Regenbogeneffekt, der dann eintrat, wenn der Betrachter die einzelnen Farben wahrnimmt. Daher wurde in einem weiteren Schritt die Umdrehungszahl des Rades verdoppelt und bei neueren Modellen die Anzahl der Farbsegmente erhöht.

Der grundsätzliche Aufbau einer derartigen Projektionsvorrichtung kann beispielsweise der US 5,917,558 entnommen werden. Die Figur 2 der genannten US 5,917,558 zeigt verschiedene Impulssteuermoden für die Projektionslampe. Wie der genannten Figur zu entnehmen ist, handelt es sich um NF-Impulse, wobei im Zeitbereich eine Modulationsperiode eine serielle Abfolge mehrerer Signalabschnitte umfasst, die unterschiedlichen Farben zugeordnet sind. Verwendet man als Projektionslampe eine Hochdruckentladungslampe, stellt sich bedauerlicherweise bei einem Betrieb mit derartigen Pulsfolgen der bereits erwähnte unerwünschte Effekt des Springens des Ansatzes des Lichtbogens auf den Elektrodenspitzen ein.

Überdies kommt es bei dieser Betriebsart trotz der schnellen Kommutierung der Lampe zu einem merklichen Einbruch des Lichtstroms und damit zum Verlust der Kontrolle über den Lichtstrom in diesem Zeitraum. Dieser Kontrollverlust muss in den heutigen Anwendungen umgangen werden, indem man diesen Zeitraum in Ausblendlücken legt. Weiterhin zeigt die Vorgehensweise nach dem Stand der Technik nach dem Einbruch des Lichtstroms Schwingungserscheinungen des Lichtstroms. In diesem Zeitraum kann somit der Lichtstrom nicht kontrolliert und oft auch nicht genutzt werden. Der Kontrollverlust stört in den heutigen Anwendungen beispielsweise die Farbbalance und muss durch aufwändige Maßnahmen im Gerät ausgeglichen werden.

Weiterer Stand der Technik ist zu finden in der US 5,109,181, der DE 100 18 860 A1 sowie der US 2006/0022613 A1.

### Darstellung der Erfindung

Der vorliegenden Erfindung liegt deshalb die Aufgabe zugrunde, die eingangs genannte Schaltungsanordnung bzw. das eingangs genannte Verfahren derart weiterzubilden, dass ein Springen des Ansatzes des Lichtbogens auf den Elektrodenspitzen zuverlässig verhindert wird.

Diese Aufgabe wird gelöst durch eine Schaltungsanordnung mit den Merkmalen von Patentanspruch 1 bzw. durch ein Verfahren mit den Merkmalen von Patentanspruch 19. Überdies stellt die vorliegende Erfindung eine Projektionsvorrichtung bereit, die eine erfindungsgemäße Schaltungsanordnung aufweist, in der demnach der genannte unerwünschte Effekt ebenfalls nicht auftritt.

Der vorliegenden Erfindung liegt die Erkenntnis zugrunde, dass diese Aufgabe gelöst werden kann, wenn zunächst als AC-Speisesignal ein amplitudenmoduliertes HF-Signal mit einer Frequenz von mindestens 500 kHz verwendet wird. Aus Gründen der EMV wird bevorzugt eine Frequenz von ca. 50 MHz als obere Frequenzbereichsgrenze gewählt. Überdies sollen sich die Amplituden der den einzelnen Farben zugeordneten Signalabschnitte so voneinander unterscheiden, dass sich der bereits in der PCT/EP2006/068269 bereits erwähnte Effekt einstellt. Ganz allgemein gesprochen bedeutet dies, dass für die jeweilige Einhüllende der Signalanteile mit positiver beziehungsweise negativer Amplitude gilt:
- die Einhüllende der Signalanteile mit positiver Amplitude weist jeweils eine mittlere positive Amplitude
- die Einhüllende der Signalanteile mit negativer Amplitude weist jeweils eine mittlere negative Amplitude auf;
- der erste Signalabschnitt und/oder der zweite Signalabschnitt und/oder der dritte Signalabschnitt weist/weisen mindestens einen zeitlichen Bereich auf, in denen die Einhüllende der Signalanteile mit positiver Amplitude zwischen 5 % und 100 % größer ist als die mittlere positive Amplitude und/oder in denen die Einhüllende (E) der Signalanteile mit positiver Amplitude zwischen 5% und 90% kleiner ist als die mittlere positive Amplitude;
- der erste Signalabschnitt und/oder der zweite Signalabschnitt und/oder der dritte Signalabschnitt weist/weisen mindestens einen zeitlichen Bereich auf, in denen die Einhüllende der Signalanteile mit negativer Amplitude zwischen 5 % und 100 % kleiner ist als die mittlere negative Amplitude und/oder in denen die Einhüllende (E) der Signalanteile mit negativer Amplitude zwischen 5% und 90% größer ist als die mittlere negative Amplitude.

Bei der erfindungsgemäßen Vorgehensweise kann eine unterbrechungsfreie Kontrolle über den emittierten Lichtstrom der Lampe ausgeübt werden. Diese Lichtstromkontrolle erfolgt sehr schnell mit äußerst geringer Verzögerung und kann eine hohe Dynamik der Lichtstrommodulation aufweisen. Aufgrund der extrem schnellen, unterbrechungsfreien Kontrolle des von der Lampe emittierten Lichtstroms treten keine Lichtstromlücken oder Einschwingvorgänge auf, die beim Betrieb nach dem Stand der Technik wegen der Lampenstromkommutierung kaum zu vermeiden sind. Die Lichtstromkontrolle kann bei der Erfindung sehr einfach über die Höhe der Amplitude des speisenden HF-Stroms erfolgen.

Die erfindungsgemäße Schaltungsanordnung ermöglicht eine extrem schnelle Lichtstromkontrolle mit sehr großer Modulationstiefe. Dadurch kann sowohl eine hohe Dynamik des Dimmens als auch der Überhellung erzielt werden. Neben der Fähigkeit beispielsweise schnell folgenden Bildinhalten mit der entsprechenden Helligkeit zu folgen, ist dies von großer Bedeutung bei der genauen Abmischung der Farben mit verschiedenen Lampenhelligkeiten in einzelnen Farbradsektoren. Erst die durch eine erfindungsgemäße Schaltungsanordnung gegebene Möglichkeit der präzisen Dimmung bzw. Überhellung der Lampe in den einzelnen Farbradsektoren ohne Schwingungserscheinungen und ohne spektrale Reaktion ermöglicht eine äußerst genaue Abmischung von Farben.

Die Ursachen dafür, dass grundsätzlich durch ein AC-Speisesignal, ausgebildet als amplitudenmoduliertes HF-Signal mit einer Frequenz von mindestens 500 kHz; eine sofortige (< 1 s), effektive Stabilisierung des Lichtbogens bei Hochfrequenzbetrieb erreicht werden kann, sind gegenwärtig noch nicht ganz geklärt, da neben Amplitudenerhöhungen, wie erwähnt, auch Amplitudenminderungen den erfindungsgemäßen Erfolg herbeiführen und zur Vermeidung von Flackererscheinungen von Entladungsbögen ganz allgemein, insbesondere Plasmabögen in Hochdruckentladungslampen, führen. Ein Indiz hierfür ist, dass sich eine stabilisierende Spitzenbildung ähnlich der, wie sie sich beim Betrieb mit der in der erwähnten US 5,608,294 vorgestellten Schaltungsanordnung ergibt, erst nach einigen Stunden einstellt. Mit anderen Worten bedeutet dies, dass die eigentliche Erklärung für die erfindungsgemäße Lösung eben nicht oder zumindest nicht nur in der Spitzenbildung zu finden ist.

Im Ergebnis lässt sich jedoch, und dies ist der wichtigste Aspekt, hinsichtlich der Zeitkonstanz und Ortskonstanz des Entladungsbogens eine Stabilisierung erreichen, die selbst den hohen optischen Anforderungen an Projektionslampen genügt.

In einer bevorzugten Ausführungsform ist dabei das AC-Speisesignal ein symmetrisch amplitudenmoduliertes HF-Signal, bei dem der Betrag der Einhüllenden der Signalanteile positiver Amplitude gleich dem Betrag der Einhüllenden der Signalanteile negativer Amplitude ist. In einer alternativen bevorzugten Ausführungsform setzt sich das AC-Speisesignal zusammen aus einem HF-Signal und einem NF-Signal mit variierender Amplitude. Dabei kann die Einhüllende des HF-Signals eine konstante Amplitude aufweisen, sie kann jedoch auch eine variierende Amplitude aufweisen, wobei die Variation abgestimmt ist auf die Variation der Amplitude des NF-Signals. Eine bevorzugte Abstimmung kann so ausgelegt sein, dass eine erhöhte Amplitude des NF-Signals durch eine reduzierte Amplitude der Einhüllenden des HF-Signals kompensiert wird. In der Folge emittiert die Hochdruckentladungslampe einen Lichtstrom konstanter Amplitude und ist im Vergleich zum Stand der Technik während wesentlich geringerer Zeiträume stromlos. Als Konsequenz lassen sich für einen Beobachter keine Flackererscheinungen wahrnehmen, wobei dennoch - wie im Stand der Technik - eine Reformation der Elektroden stattfindet. Bei einer bevorzugten alternativen Abstimmung können die Amplitude der Einhüllenden des HF-Signals und die Amplitude des NF-Signals so gewählt sein, dass sich ein Kompromiss aus einem möglichst konstanten Lichtstrom und einer ausreichenden Elektrodenreformation ergibt.

Generell setzt sich bevorzugt der Betrag der Einhüllenden zumindest eines der Signalabschnitte zusammen aus einem Bereich einer ersten Amplitude gefolgt von zumindest einem Bereich einer zweiten Amplitude, wobei der Betrag der zweiten Amplitude kleiner als der Betrag der ersten Amplitude ist. Dabei beträgt die zweite Amplitude bevorzugt 50 bis 90 %, noch bevorzugter 67 % der ersten Amplitude.

Überdies kann weiterhin ein Bereich einer dritten Amplitude vorgesehen sein, wobei die zweite Amplitude 50 bis 90 %, bevorzugt 67 %, und die dritte Amplitude 2 bis 50 %, bevorzugt 37 % der ersten Amplitude beträgt.

Besonders bevorzugt weist das elektronische Vorschaltgerät einen Regelkreis zur Regelung der an die Hochdruckentladungslampe abgegebenen HF-Leistung auf. Bei den im Stand der Technik verwendeten NF-Schaltungen, d. h. Schaltungsanordnungen, die als AC-Speisesignal ein NF-Signal bereitstellen, wird hierzu die Speiseschaltung ausgemessen und daraus auf die abgegebene Leistung geschlossen. Dies ist jedoch bei erfindungsgemäßen Schaltungsanordnungen, die als AC-Speisesignal ein amplitudenmoduliertes HF-Signal bereitstellen, aufgrund der Variation des Wirkungsgrads, insbesondere durch seine Abhängigkeit von der Temperatur, bei einer erfindungsgemäßen Schaltungsanordnung ungünstig. Der Regelkreis umfasst daher bevorzugt eine Vorrichtung zur Ermittlung des Istwerts der HF-Leistung sowie eine Sollwert-Vorgabevorrichtung zur Vorgabe des Sollwerts für die HF-Leistung.

Bevorzugt umfasst die Vorrichtung zur Ermittlung des Istwerts der HF-Leistung eine Vorrichtung zur Bestimmung des an die Hochdruckentladungslampe abgegebenen HF-Stroms, eine Vorrichtung zur Bestimmung der an der Hochdruckentladungslampe anliegenden HF-Spannung sowie eine Vorrichtung zur Ermittlung des Istwerts der HF-Leistung aus dem HF-Strom und der HF-Spannung, insbesondere durch analoge Verknüpfung des HF-Stroms und der HF-Spannung. Insbesondere bei der zuletzt erwähnten analogen Verknüpfung des HF-Stroms und der HF-Spannung lässt der Istwert der HF-Leistung ohne den Umweg einer digitalen Berechnung quasi unmittelbar ermitteln. Dies ermöglicht einen maximal schnellen Regelkreis.

Bevorzugt umfasst die Vorrichtung zur Bestimmung des an die Hochdruckentladungslampe abgegebenen HF-Stroms einen ersten Spitzenwertgleichrichter und die Vorrichtung zur Bestimmung der an die Hochdruckentladungslampe angelegten HF-Spannung einen zweiten Spitzenwertgleichrichter.

Bevorzugte Ausführungen für die Vorrichtung zur Ermittlung des Istwerts der HF-Leistung stellen beispielsweise ein Ringmischer oder ein Brückenmischer dar. Grundsätzlich lässt sich hierdurch eine Regelung realisieren, die so schnell ist, wie es das Plasma in der Hochdruckentladungslampe erlaubt.

Bei einer bevorzugten Ausbildung der erfindungsgemäßen Schaltungsanordnung umfasst diese weiterhin ein frequenzabhängiges, insbesondere resonantes, Lastnetzwerk, das in Abhängigkeit der ansteuernden Frequenz den HF-Strom und die HF-Spannung an die Hochdruckentladungslampe bereitstellt, wobei dann der Regelkreis weiterhin ein Stellglied zur Ermittlung einer Änderung der das Lastnetzwerk ansteuernden Frequenz aus der Differenz zwischen dem Sollwert und dem Istwert der HF-Leistung umfasst. Dies ermöglicht eine besonders schnelle Regelung.

Besonders vorteilhaft ist eine Auslegung des Regelkreises, die die Regelung farbspezifisch, d. h. getrennt für mindestens die erste, die zweite und die dritte Farbe, vorzunehmen.

Die Sollwert-Vorgabevorrichtung kann ausgelegt sein, den dem Regelkreis vorzugebenden Sollwert zeitlich entsprechend der aktuellen Farbe und/oder zur Bereitstellung verringerter Lichtintensitäten zu variieren. Dies ermöglicht bei begrenzter Stufung des Lichtventils eine Halbierung oder Viertelung der Stufenamplitude und damit eine Verdoppelung oder Vervierfachung der Auflösung.

Schließlich kann die Sollwert-Vorgabevorrichtung eine Schnittstelle aufweisen, über die mindestens ein Sollwert, insbesondere durch einen Benutzer, änderbar ist.

Wie bereits erwähnt, betrifft die vorliegende Erfindung weiterhin eine Projektionsvorrichtung mit einer erfindungsgemäßen Schaltungsanordnung. Eine derartige Projektionsvorrichtung ermöglicht eine deutlich bessere Ausnutzung der an die Projektionslampe abgegebenen Energie und führt daher zu einem höheren Wirkungsgrad als im Stand der Technik. Dies erlaubt eine deutlich kleinere Dimensionierung der in derartigen Projektionsvorrichtungen vorgesehenen Lüfter, was in einer sehr erwünschten Absenkung des Geräuschpegels beim Betrieb derartiger Projektionsvorrichtungen resultiert. Die genannten Vorteile haben ihre Ursache darin, dass bei Verwendung einer erfindungsgemäßen Schaltungsanordnung im Verlauf des die Hochdruckentladungslampe ansteuernden Stroms keine Kommutierungslücken vorgesehen sein müssen. Im Stand der Technik musste das Lichtventil, um Lichtfehler während der Kommutierung zu vermeiden, so angesteuert werden, dass das Licht vom Objektiv weggelenkt wird und somit nicht zur Anzeige kommt.

Weitere vorteilhafte Ausführungsformen ergeben sich aus den Unteransprüchen.

Die mit Bezug auf die erfindungsgemäße Schaltungsanordnung bzw. auf die erfindungsgemäße Projektionsvorrichtung erwähnten bevorzugten Ausführungsformen und deren Vorteile gelten entsprechend, soweit anwendbar, für das erfindungsgemäße Verfahren.

### Kurze Beschreibung der Zeichnung(en)

Im Nachfolgenden werden nunmehr Ausführungsbeispiele der Erfindung unter Bezugnahme auf die beigefügten Zeichnungen näher beschrieben. Es zeigen:
- Fig. 1: in schematischer Darstellung den Aufbau einer er- findungsgemäßen Projektionsvorrichtung;
- Fig. 2: in schematischer Darstellung den Aufbau eines in der Darstellung von Fig. 1 verwendeten Regelkrei- ses zur Regelung der an die Hochdruckentladungs- lampe abgegebenen HF-Leistung;
- Fig. 3: ein erstes Ausführungsbeispiel einer in der Dar- stellung von Fig. 2 verwendeten Vorrichtung zur Ermittlung des Istwerts der HF-Leistung;
- Fig. 4: ein zweites Ausführungsbeispiel einer in der Dar- stellung von Fig. 2 verwendeten Vorrichtung zur Ermittlung des Istwerts der HF-Leistung;
- Fig. 5: ein drittes Ausführungsbeispiel einer in der Dar- stellung von Fig. 2 verwendeten Vorrichtung zur Ermittlung des Istwerts der HF-Leistung;
- Fig. 6: in schematischer Darstellung den zeitlichen Ver- lauf eines AC-Speisesignals für die Hochdruckent- ladungslampe gemäß einem ersten Ausführungsbei- spiel;
- Fig.: 7 in schematischer Darstellung den zum zeitlichen Verlauf des HF-Stroms von Fig. 6 zugehörigen zeit- lichen Verlauf des Lichtstroms;
- Fig. 8: in schematischer Darstellung den zeitlichen Ver- lauf eines AC-Speisesignals für die Hochdruckent- ladungslampe gemäß einem zweiten Ausführungsbei- spiel; und
- Fig. 9: in schematischer Darstellung den zeitlichen Ver- lauf eines AC-Speisesignals für die Hochdruckent- ladungslampe gemäß einem dritten Ausführungsbei- spiel.

### Bevorzugte Ausführung der Erfindung

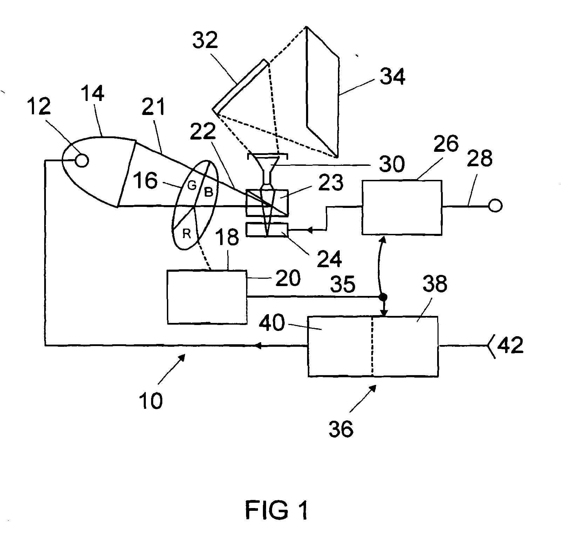

Fig. 1 zeigt in schematischer Darstellung den Aufbau eines Ausführungsbeispiels einer erfindungsgemäßen Projektionsvorrichtung 10. Diese weist eine Hochdruckentladungslampe 12 auf, deren ausgestrahltes Licht von einem Reflektor 14 auf ein Farbrad 16 gerichtet wird. Das Farbrad 16 umfasst drei 120°-Segmente dichroitischer Filter verschiedener Farben, in diesem Fall Rot, Grün und Blau. Das Farbrad 16 kann sich um die Achse drehen und wird von einem Radantriebsystem 18 angetrieben, das ein Ausgangssignal 20 liefert, das repräsentativ ist für die Lage des Farbrads 16 und folglich für die betreffende Farbe, die in dem Ausgangsstrahl 21 der Hochdruckentladungslampe 12 steht. Der Ausgangsstrahl 22 nach dem Farbrad 16 ist vorliegend sequenziell rot, grün und blau. Der Ausgangsstrahl 22 wird durch einen Strahlspalter 23 auf die Oberfläche eines Lichtventils 24 gerichtet, das in diesem Beispiel eine verformbare Spiegeleinrichtung ist. Der eintreffende Strahl 22 gefärbten Lichts wird entsprechend der von dem Lichtventil 24 gelieferten Videoinformation durch eine Lichtventilsteuerung 26 moduliert, welche die Videoinformation von einem Videosignaleingang 28 erhält. Der an der Oberfläche des Lichtventils 24 reflektierte, modulierte Strahl gefärbten Lichts wird von einer Projektionslinse 30 auf einen Spiegel 32 fokussiert und zu einem Wiedergabeschirm 34 hin reflektiert. Im Betrieb wird jede Farbe sequenziell auf das Lichtventil projiziert, von dem Lichtventil 24 mit der speziellen Videoinformation für diese Farbe moduliert und auf den Schirm 34 projiziert. Die Farbbilder folgen so schnell aufeinander, dass das Auge die einzelnen Bilder zu einem Vollfarbbild integriert.

Die Information über die Stellung des Farbrads wird über eine Leitung 35 an einen Regelkreis 38 und die Ventilsteuerung 26 bereitgestellt, der zusammen mit einer Vorrichtung 40 zur Ermittlung des Istwerts der HF-Leistung in einer Schaltungsanordnung 36 zusammengefasst ist. Diese umfasst weiterhin eine Schnittstelle 42, über die ein Benutzer die Möglichkeit hat, den relativen Anteil der Farben im Ausgangssignal der Vorrichtung 40 zur Messung der HF-Leistung, mit dem die Hochdruckentladungslampe 12 angesteuert wird, beispielsweise länderspezifisch, einzustellen.

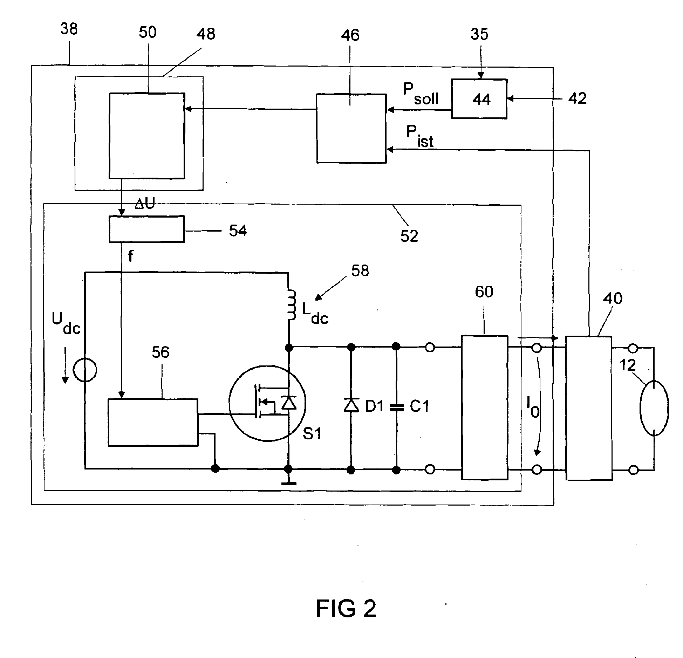

Fig. 2 zeigt eine detailliertere Darstellung des Regelkreises 38 von Fig. 1 gemäß einem bevorzugten Ausführungsbeispiel. Sie weist eine Sollwert-Vorgabevorrichtung 44 auf, die einen Sollwert Pₛₒₗₗ für die HF-Leistung an eine Differenziervorrichtung 46 vorgibt, der überdies der Istwert Pᵢₛₜ der HF-Leistung zugeführt wird. Diese ermittelt den Regelfehler ΔP und führt diesen einem Stellglied 48 zu, das vorliegend eine Einheit 50 umfasst, um aus dem Regelfehler ΔP eine Stellgröße ΔU zu ermitteln. Der Block 50 kann eine Nachschlagetabelle (Look Up Table) oder einen formelmäßigen Zusammenhang zwischen ΔP und ΔU wiedergeben.

Die Regelgröße ΔU wird einer Regelstrecke 52 zugeführt, die an ihrem Ausgang das die Hochdruckentladungslampe 12 ansteuernde HF-Signal bereitstellt. Vorliegend umfasst die Regelstrecke 52 einen VCO (Voltage Controlled Oscillator) 54. Der VCO 54 stellt an seinem Ausgang entsprechend der geänderten Spannung an seinem Eingang ein Signal mit einer geänderten Frequenz f bereit, die einer Steuereinheit 56 zugeführt wird, um über die Ansteuerung eines Schalters S1 das Signal zu erzeugen, mit dem die Hochdruckentladungslampe 12 angesteuert wird. Die Hochfrequenzschaltstufe, die im vorliegenden Ausführungsbeispiel als schaltentlastete Klasse-E-Schaltstufe ausgebildet ist, umfasst neben der Steuervorrichtung 56 eine Gleichspannungsquelle U_{dc}, eine Induktivität L_{dc}, eine Diode D1 sowie einen Kondensator C1. Wie für den Fachmann offensichtlich, können andere Ausbildungen der HF-Schaltstufe vorgesehen werden, beispielsweise als schaltentlastete Gegentakt HF-Schaltstufe, als schaltentlastete HF-Halbbrücke und dergleichen.

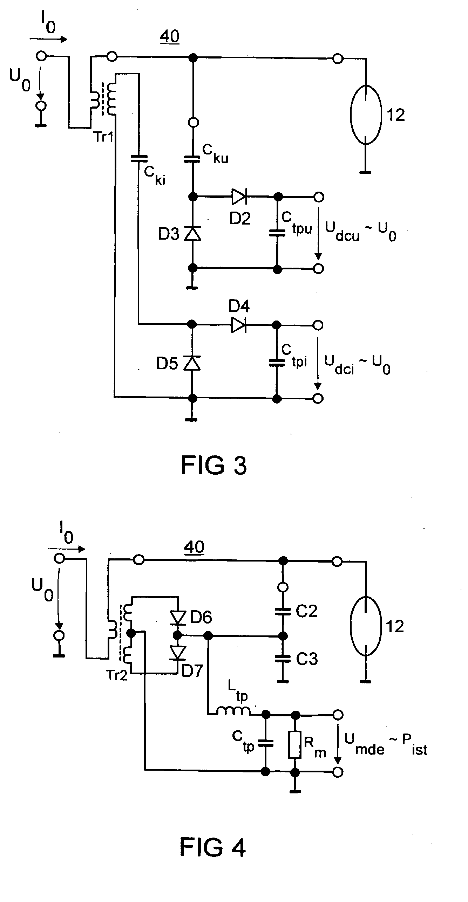

Die Regelstrecke 52 umfasst weiterhin ein resonantes Lastfilter 60, das vorliegend abgestimmt ist, um einen ZVS (Zero Voltage Switching)-Betrieb zu ermöglichen. Am Ausgang der Regelstrecke 52 wird der Hochdruckentladungslampe 12 über die bereits erwähnte Vorrichtung 40 zur Ermittlung des Istwerts der HF-Leistung eine HF-Spannung U₀ und ein HF-Strom I₀ bereitgestellt. Besonders bevorzugte Beispiele für Ausführungsformen der Vorrichtung 40 zur Ermittlung des Istwerts der HF-Leistung sind in den Figuren 3, 4 und 5 dargestellt.

Fig. 3 zeigt ein erstes Ausführungsbeispiel einer Vorrichtung 40 zur Ermittlung des Istwerts der HF-Leistung. Diese Ausführungsform arbeitet ohne Berücksichtigung der Phase. Der HF-Strom I₀ und die HF-Spannung U₀ werden jeweils unabhängig durch doppelte Spitzenwertgleichrichtung in eine Gleichspannung U_{dci}, die proportional zum HF-Strom I₀ ist, und U_{dcu}, die proportional zur HF-Spannung U₀ ist, überführt. Zeigt die Hochdruckentladungslampe 12, die zur Verdeutlichung ebenfalls eingezeichnet ist, überwiegend ohmsches Verhalten, reicht diese Vorgehensweise zur Leistungsbestimmung und Leistungsregelung vollkommen aus. Sie umfasst einen Transformator Tr1, der einen Schaltungsteil speist, der zur Bestimmung von U_{dci} ausgelegt ist. Er umfasst einen Kondensator Cₖᵢ, zwei Dioden D4 und D5 sowie einen weiteren Kondensator Cₜₚᵢ. Der andere Schaltungsteil dient der Bereitstellung der Spannung U_{dcu}, der strukturell den gleichen Aufbau wie die zuerst genannte Schaltungseinheit aufweist. Die dort verwendeten Bauteile tragen die Bezeichnungen Cₖᵤ, D2, D3 und Cₜₚᵤ.

Fig. 4 zeigt ein zweites Ausführungsbeispiel einer Vorrichtung 40 zur Messung des Istwerts der HF-Leistung. Sie ist als Brückenmischerschaltung ausgebildet, die im Gegensatz zu dem Ausführungsbeispiel von Fig. 3 nunmehr die Phase zwischen dem HF-Strom I₀ und der HF-Spannung U₀ berücksichtigt. Sie umfasst einen Transformator Tr2, zwei Dioden D6, D7, drei Kondensatoren C2, C3, Cₜₚ, eine Induktivität Lₜₚ und einen Messwiderstand Rₘ. An ihrem Ausgang wird die Messspannung U_{mdc} bereitgestellt, die das Skalarprodukt aus dem HF-Strom I₀ und der HF-Spannung U₀ umfasst. Damit kann eine genaue Leistungsregelung auch bei nicht-ohmschem Lastverhalten der Hochdruckentladungslampe 12 realisiert werden.

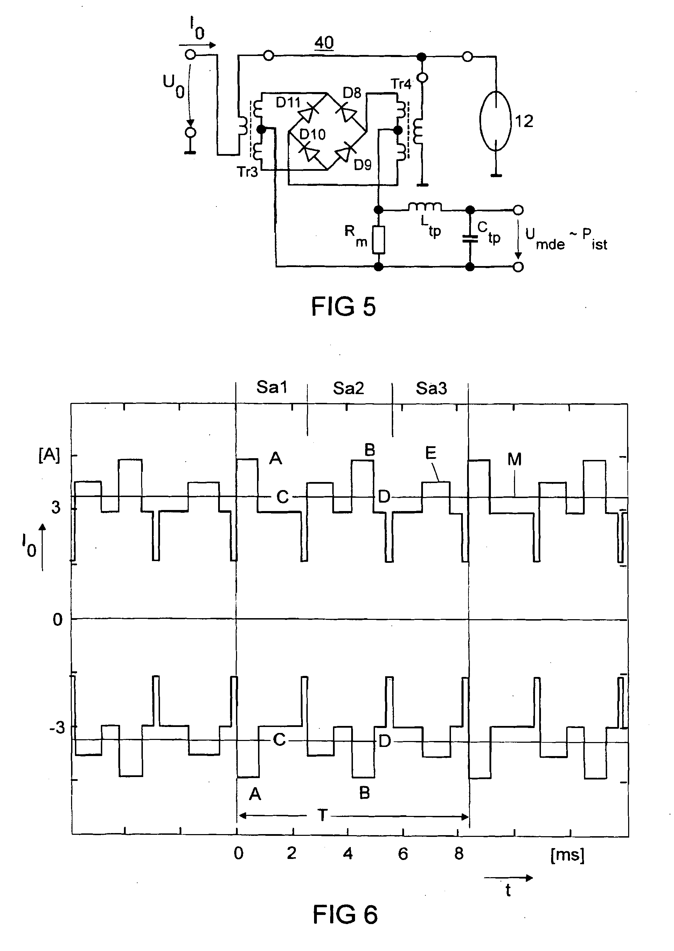

Fig. 5 zeigt ein drittes Ausführungsbeispiel einer Vorrichtung 40 zur Messung des Istwerts der HF-Leistung. Sie ist als Ringmischerschaltung ausgeführt und erlaubt ebenso wie das Ausführungsbeispiel von Fig. 4 die Ermittlung des Istwerts der HF-Leistung unter Berücksichtigung der Phase zwischen HF-Strom und HF-Spannung. Sie ermöglicht die Bestimmung der Wirkleistung und damit die Leistungsregelung nicht-ohmscher Lasten. Sie umfasst zwei Transformatoren Tr3, Tr4, vier Dioden D8, D9, D10, D11, einen Kondensator Cₜₚ, eine Induktivität Lₜₚ und einen Messwiderstand Rₘ.

Fig. 6 zeigt den zeitlichen Verlauf des HF-Stroms I₀, mit dem die Hochdruckentladungslampe 12 gespeist wird. Die sinusförmige Hochfrequenzschwingung ist zwischen der Einhüllenden E. Die Modulationsperiode T beträgt vorliegend 8,33 ms (120 Hz). Sie wird stetig wiederholt und ändert sich nicht. Zur Lichtkontrastförderung sind pro Modulationsperiode T drei kurze Einbrüche vorgesehen. Wie am oberen Rand des dargestellten Diagramms eingetragen, weist eine Modulationsperiode T drei zeitlich aufeinander folgende Signalabschnitte Sa1, Sa2, Sa3, auf, die drei unterschiedlichen Farben zugeordnet sind, im Ausführungsbeispiel nämlich den Farben Grün, Rot und Blau. Weiterhin eingetragen ist die mittlere Amplitude M der Einhüllenden E. Wie deutlich zu erkennen, weist der Verlauf keinerlei Kommutierungslücken auf.

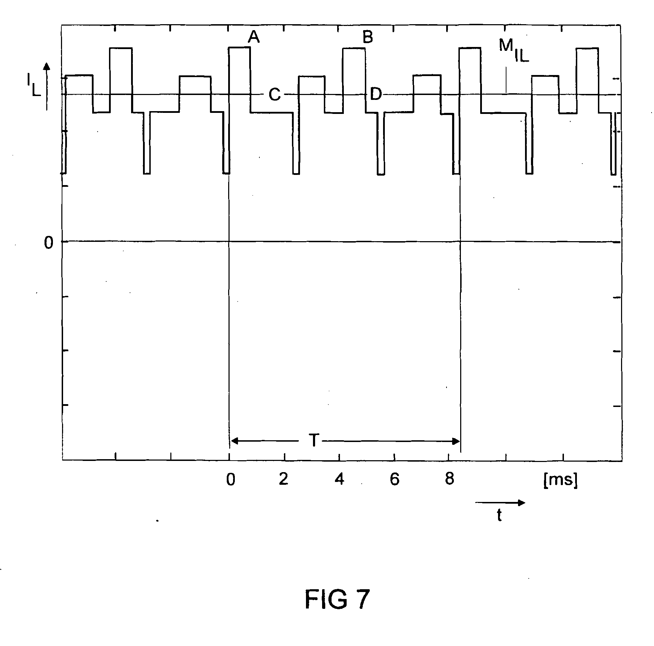

Fig. 7 zeigt den zum zeitlichen Verlauf des HF-Stroms von Fig. 6 zugehörigen Lichtstrom. Bei Fig. 7 ist überdies der durchschnittliche Lichtstrom M_{IL} eingetragen. Die Betrachtung des zeitlichen Verlaufs des Stroms I₀ bzw. des Lichtstroms I_{L} der Figuren 6 und 7 zeigt starke Leistungsschwankungen beispielsweise von dem Bereich A zu dem Bereich C und von dem Bereich B zu dem Bereich D.

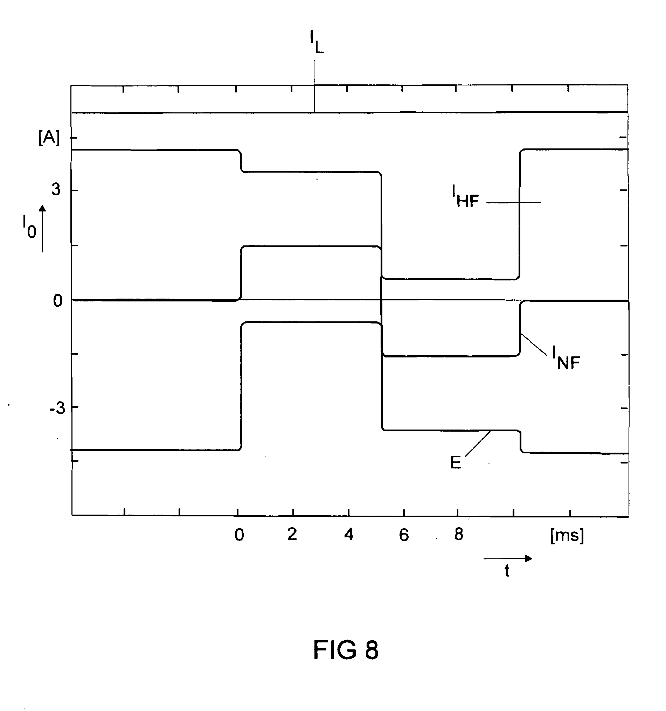

Fig. 8 zeigt ein zweites Ausführungsbeispiel des zeitlichen Verlaufs des Stroms I₀, der vorliegend zusammengesetzt ist aus einem HF-Signal und einem NF-signal. Dabei weist die Einhüllende E des HF-Signals variierende Amplitude auf, die so auf die variierende Amplitude des NF-Signals abgestimmt ist, dass sich ein konstanter Lichtstrom I_{L} ergibt. In der Darstellung von Fig. 8 bildet die oberste durchgezogene Linie des Signalverlaufs und die unterste durchgezogene Linie des Signalverlaufs die Einhüllende E. Es fällt auf, dass der zeitliche Verlauf des NF-Anteils I_{NF} in zwei aufeinander folgenden Perioden sein Vorzeichen wechselt.

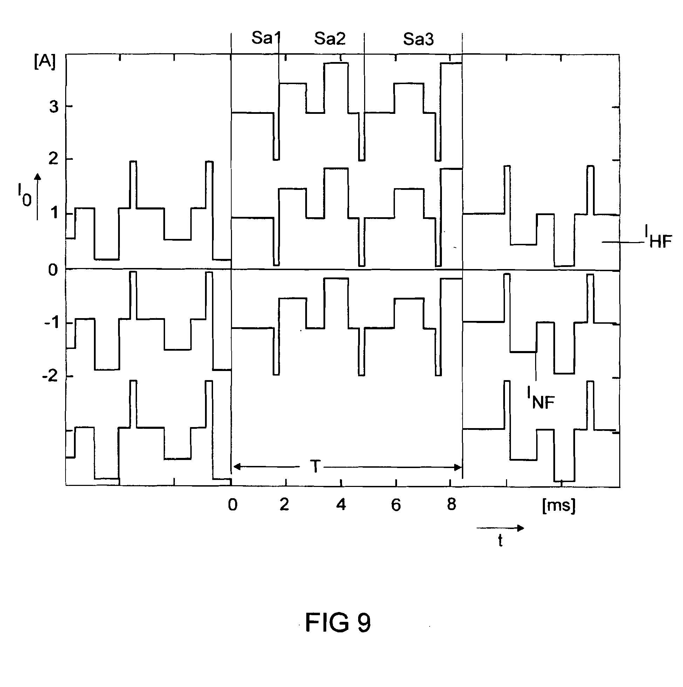

Fig. 9 zeigt ein drittes Ausführungsbeispiel des zeitlichen Verlaufs des Stroms I₀, der vorliegend, wie bereits beim Ausführungsbeispiel von Fig. 8, zusammengesetzt ist aus einem HF-Signal und einem NF-Signal. Dabei weist nunmehr die Einhüllende des HF-Signals eine konstante Amplitude auf, das NF-Signal eine variierende Amplitude. Diese setzt sich zusammen aus dem eingezeichneten Verlauf eines NF-Signals I_{NF}, dem ein HF-Signal I_{HF} konstanter Amplitude überlagert ist. Eingetragen sind wiederum die drei Farben zugeordneten Signalabschnitte Sa1, Sa2, Sa3.

| Farbrad Umdreh ung Nr. | Farbenfolge | Strom-ampl. (relativ) | Dauer [µs] | Dauer (relativ) | Umdrehung Dauer [µs] |
|---|---|---|---|---|---|
| 1 | Y1 - Gelb | 87,18% | 602 | 14,45% | |
| 1 | M1 - Magenta | 87,18% | 409 | 9,82% | |
| 1 | G1 - Grün | 87,18% | 567 | 13.61% | |
| 1 | GND50 - Grün dunkel (near dark) | 41,51% | 132 | 3,17% | |
| 1 | R1 - Rot | 113,12% | 1015 | 24,36% | |
| 1 | C1 - Cyan | 87,18% | 589 | 14,13% | |
| 1 | B1 - Blau | 130,77% | 822 | 19,73% | 4136 |
| 2 | Y2 - Gelb | 87,18% | 497 | 11,93% | |
| 2 | YND50 - Gelb dunkel (near dark) | 41,51% | 123 | 2,95% | |
| 2 | M2 - Magenta | 87,18% | 409 | 9,82% | |
| 2 | G2 - Grün | 87,18% | 721 | 17,30% | |
| 2 | R2 - Rot | 113,12% | 1033 | 24,79% | |
| 2 | C2 - Cyan | 87,18% | 492 | 11,81% | |
| 2 | CND50 Cyan dunkel (near dark) | 40,48% | 119 | 2,86% | |
| 2 | B2 - Blau | 130,77% | 804 | 19,29% | 4198 |
| 3 | Y3 - Gelb | 87,18% | 602 | 14,45% | |
| 3 | M3 - Magenta | 87,18% | 409 | 9,82% | |
| 3 | G3 - Grün | 87,18% | 567 | 13,61% | |
| 3 | GND50 - Grün dunkel (near dark) | 41,51% | 132 | 3,17% | |
| 3 | R3 - Rot | 113,12% | 1015 | 24,36% | |
| 3 | C3 - Cyan | 87,18% | 589 | 14,13% | |
| 3 | B3 - Blau | 130,77% | 822 | 19,73% | 4136 |
| 4 | Y4 - Gelb | 87,18% | 497 | 11,93% | |
| 4 | YND50 - Gelb dunkel (near dark) | 41,51% | 123 | 2,95% | |
| 4 | M4 - Magenta | 87,18% | 409 | 9,82% | |
| 4 | G4 - Grün | 87,18% | 721 | 17,30% | |
| 4 | R4 - Rot | 113,12% | 1033 | 24,79% | |
| 4 | C4 - Cyan | 87,18% | 492 | 11,81% | |
| 4 | GND50 Gyan dunkel (near dark) | 40,48% | 119 | 2,86% | |
| 4 | B4 - Blau | 130,77% | 804 | 19,29% | 4198 |

Die obige Tabelle stellt eine realisierte Sequenz der Lichtmodulation in einem Rückprojektionsfernseher dar, der ein Sechs-Segment-Farbrad mit den Farben Rot, Grün, Blau, Gelb, Magenta, Cyan benutzt. Das Farbrad weist, wie erwähnt, sechs Segmente unterschiedlicher Farbe auf, wobei die zusätzlichen Zustände, beispielsweise "Grün dunkel" oder "Gelb dunkel", durch Dimmung der Hochdruckentladungslampe erzeugt werden. Die Frequenz weist vier unterschiedliche Zyklen auf, die nachfolgend durch die Nummer der Farbradumdrehung wiedergegeben sind. Die Tabelle gibt die relative Stromamplitude, die Dauer in µs, die relative Dauer in % sowie die Dauer der Umdrehung des entsprechenden Zyklus an. Die Betriebs-HF-Frequenz beträgt 5,6 MHz.

## Patentansprüche

1. Schaltungsanordnung zum Betreiben einer Hochdruckentladungslampe (12) mit einem elektronischen Vorschaltgerät, das ausgelegt ist, ein AC-Speisesignal für die Hochdruckentladungslampe (12) bereitzustellen, das im Zeitbereich als Modulationsperiode (T) eine serielle Abfolge zumindest eines ersten (Sa1), eines zweiten (Sa2) und eines dritten Signalabschnitts (Sa3) umfasst, die einer ersten, einer zweiten und einer dritten Farbe zugeordnet sind,
**dadurch gekennzeichnet,**
**dass** das AC-Speisesignal ein amplitudenmoduliertes HF-Signal (I_{HF}) mit einer Frequenz (f) von mindestens 500 kHz ist,
wobei für die jeweiligen Einhüllenden (E) der Signalanteile mit positiver beziehungsweise negativer Amplitude gilt:
- die Einhüllende (E) der Signalanteile mit positiver Amplitude weist jeweils eine mittlere positive Amplitude (M)
- die Einhüllende (E) der Signalanteile mit negativer Amplitude weist jeweils eine mittlere negative Amplitude auf;
- der erste Signalabschnitt (Sa1) und/oder der zweite Signalabschnitt (Sa2) und/oder der dritte Signalabschnitt (Sa3) weist/weisen mindestens einen zeitlichen Bereich auf, in denen die Einhüllende (E) der Signalanteile mit positiver Amplitude zwischen 5 % und 100 % größer ist als die mittlere positive Amplitude und/oder in denen die Einhüllende (E) der Signalanteile mit positiver Amplitude zwischen 5% und 90% kleiner ist als die mittlere positive Amplitude (M);
- der erste Signalabschnitt (Sa1) und/oder der zweite Signalabschnitt (Sa2) und/oder der dritte Signalabschnitt (Sa3) weist/weisen mindestens einen zeitlichen Bereich auf, in denen die Einhüllende (E) der Signalanteile mit negativer Amplitude zwischen 5 % und 100 % kleiner ist als die mittlere negative Amplitude und/oder in denen die Einhüllende (E) der Signalanteile mit negativer Amplitude zwischen 5% und 90% größer ist als die mittlere negative Amplitude (M).

2. Schaltungsanordnung nach Anspruch 1,
**dadurch gekennzeichnet,**
**dass** das AC-Speisesignal ein symmetrisch amplitudenmoduliertes HF-Signal (I_{HF}) ist, bei dem der Betrag der Einhüllenden (E) der Signalanteile positiver Amplitude gleich dem Betrag der Einhüllenden (E) der Signalanteile negativer Amplitude ist.

3. Schaltungsanordnung nach Anspruch 1,
**dadurch gekennzeichnet,**
**dass** sich das AC-Speisesignal zusammensetzt aus:
- einem HF-Signal (I_{HF}) mit variierender oder fester Amplitude, und
- einem NF-Signal (I_{NF}) mit variierender oder fester Amplitude.

4. Schaltungsanordnung nach Anspruch 3,
**dadurch gekennzeichnet,**
**dass** die Einhüllende (E) des HF-Signals (I_{HF}) konstante Amplitude aufweist.

5. Schaltungsanordnung nach Anspruch 3,
**dadurch gekennzeichnet,**
**dass** die Einhüllende (E) des HF-Signals (I_{HF}) eine variierende Amplitude aufweist, wobei die Variation abgestimmt ist auf die Variation der Amplitude des NF-Signals (I_{NF}).

6. Schaltungsanordnung nach einem der vorhergehenden Ansprüche,
**dadurch gekennzeichnet,**
**dass** sich der Betrag der Einhüllenden (E) zumindest eines der Signalabschnitte (Sa1; Sa2; Sa3) zusammensetzt aus einem Bereich einer ersten Amplitude gefolgt von zumindest einem Bereich einer zweiten Amplitude, wobei der Betrag der zweiten Amplitude kleiner ist als der Betrag der ersten Amplitude.

7. Schaltungsanordnung nach Anspruch 6,
**dadurch gekennzeichnet,**
**dass** die zweite Amplitude 50 bis 90 %, bevorzugt 67 %, der ersten Amplitude beträgt.

8. Schaltungsanordnung nach einem der Ansprüche 6 oder 7,
**dadurch gekennzeichnet,**
**dass** weiterhin ein Bereich einer dritten Amplitude vorgesehen ist, wobei die zweite Amplitude 50 bis 90 %, bevorzugt 67 %, und die dritte Amplitude 2 bis 50 %, bevorzugt 37 %, der ersten Amplitude beträgt.

9. Schaltungsanordnung nach einem der vorhergehenden Ansprüche,
**dadurch gekennzeichnet,**
**dass** das elektronische Vorschaltgerät einen Regelkreis (38) zur Regelung der an die Hochdruckentladungslampe (12) abgegebenen HF-Leistung umfasst.

10. Schaltungsanordnung nach Anspruch 9,
**dadurch gekennzeichnet,**
**dass** der Regelkreis (38) umfasst:
- eine Vorrichtung (40) zur Ermittlung des Istwerts Pᵢₛₜ) der HF-Leistung;
- einer Sollwert-Vorgabevorrichtung (44) zur Vorgabe des Sollwerts (Pₛₒₗₗ) für die HF-Leistung.

11. Schaltungsanordnung nach Anspruch 10,
**dadurch gekennzeichnet,**
**dass** die Vorrichtung (40) zur Ermittlung des Istwerts (Pᵢₛₜ) der HF-Leistung einen Ringmischer oder einen Brückenmischer umfasst.

12. Schaltungsanordnung nach Anspruch 10,
**dadurch gekennzeichnet,**
**dass** die Vorrichtung (40) zur Ermittlung des Istwerts der HF-Leistung umfasst:
- eine Vorrichtung zur Bestimmung des an die Hochdruckentladungslampe (12) abgegebenen HF-Stroms (I₀);
- eine Vorrichtung zur Bestimmung der an der Hochdruckentladungslampe (12) anliegenden HF-Spannung (U₀); und
- eine Vorrichtung (40) zur Ermittlung des Istwerts (Pᵢₛₜ) der HF-Leistung aus dem HF-Strom (I₀) und der HF-Spannung (U₀), insbesondere durch analoge Verknüpfung des HF-Stroms (I₀) und der HF-Spannung (U₀).

13. Schaltungsanordnung nach Anspruch 12,
**dadurch gekennzeichnet,**
**dass** die Vorrichtung (40) zur Bestimmung des an die Hochdruckentladungslampe (12) abgegebenen HF-Stroms (I₀) einen ersten Spitzenwertgleichrichter und die Vorrichtung zur Bestimmung der an die Hochdruckentladungslampe (12) angelegten HF-Spannung (U₀) einen zweiten Spitzenwertgleichrichter umfasst.

14. Schaltungsanordnung nach einem der Ansprüche 10 bis 13,
**dadurch gekennzeichnet,**
**dass** sie weiterhin ein frequenzabhängiges, insbesondere resonantes, Lastnetzwerk (60) umfasst, das in Abhängigkeit der ansteuernden Frequenz (f) den HF-Strom (I₀) und die HF-Spannung (U₀) an die Hochdruckentladungslampe (12) bereitstellt,
wobei der Regelkreis (38) weiterhin umfasst:
- ein Stellglied (48) zur Ermittlung einer Änderung der das Lastnetzwerk (60) ansteuernden Frequenz (f) aus der Differenz zwischen dem Sollwert (Pₛₒₗₗ) und dem Istwert (Pᵢₛₜ) der HF-Leistung.

15. Schaltungsanordnung nach einem der Ansprüche 10 bis 14,
**dadurch gekennzeichnet,**
**dass** der Regelkreis (38) ausgelegt ist, die Regelung farbspezifisch, d.h. getrennt für mindestens die erste, die zweite und die dritte Farbe, vorzunehmen.

16. Schaltungsanordnung nach Anspruch 15,
**dadurch gekennzeichnet,**
**dass** die Sollwert-Vorgabevorrichtung (44) ausgelegt ist, den dem Regelkreis (38) vorzugebenden Sollwert (Pₛₒₗₗ) zeitlich entsprechend der aktuellen Farbe zu variieren.

17. Schaltungsanordnung nach einem der Ansprüche 10 bis 16,
**dadurch gekennzeichnet,**
**dass** die Sollwert-Vorgabevorrichtung (44) eine Schnittstelle (42) aufweist, über die mindestens ein Sollwert (Pₛₒₗₗ), insbesondere durch einen Benutzer, änderbar ist.

18. Projektionsvorrichtung (10) mit einer Schaltungsanordnung nach einem der vorhergehenden Ansprüche.

19. Verfahren zum Betreiben einer Hochdruckentladungslampe (12) an einer Schaltungsanordnung,
**gekennzeichnet durch** folgenden Schritt:
Ansteuern der Hochdruckentladungslampe (12) mit einem AC-Speisesignal, das im Zeitbereich als Modulationsperiode (T) eine serielle Abfolge zumindest eines ersten (Sa1), eines zweiten (Sa2) und eines dritten Signalabschnitts (Sa3) umfasst, die einer ersten, einer zweiten und einer dritten Farbe zugeordnet sind, wobei das AC-Speisesignal ein amplitudenmoduliertes HF-Signal (I_{HF}) mit einer Frequenz (f) von mindestens 500 kHz ist, wobei für die jeweiligen Einhüllenden (E) der Signalanteile mit positiver beziehungsweise negativer Amplitude gilt :
- die Einhüllende (E) der Signalanteile mit positiver Amplitude weist jeweils eine mittlere positive Amplitude auf;
- die Einhüllende der Signalanteile mit negative Amplitude weist jeweils eine mittlere negative Amplitude auf;
- der erste Signalabschnitt (Sa1) und/oder der zweite Signalabschnitt (Sa2) und/oder der dritte Signalabschnitt (Sa3) weist/weisen mindestens einen zeitlichen Bereich auf, in denen die Einhüllende (E) der Signalanteile mit positiver Amplitude zwischen 5 % und 100 % größer ist als die mittlere Amplitude und/oder in denen der Betrag der Einhüllenden (E) zwischen 5% und 90% kleiner ist als die mittlere Amplitude
- der erste Signalabschnitt (Sa1) und/oder der zweite Signalabschnitt (Sa2) und/oder der dritte Signalabschnitt (Sa3) weist/weisen mindestens einen zeitlichen Bereich auf, in denen die Einhüllende (E) der Signalanteile mit negative Amplitude zwischen 5% und 100% kleiner ist als die mittlere negative Amplitude und/oder in denen die Einhüllende (E) der Signalanteile mit negative Amplitude zwischen 5% und 90% größer ist als die mittlere negative Amplitude (M).

## Claims

1. Circuit arrangement for operating a high-pressure discharge lamp (12) with an electronic ballast, which is designed to provide an AC feed signal for the high-pressure discharge lamp (12), which AC feed signal comprises, in the time range as modulation period (T), a serial sequence of at least one first signal section (Sa1), one second signal section (Sa2) and one third signal section (Sa3), which are associated with a first, a second and a third color,
**characterized**
**in that** the AC feed signal is an amplitude-modulated RF signal (I_{RF}) with a frequency (f) of at least 500 kHz,
where the following applies for the respective envelope is (E) of the signal components with a positive or negative amplitude:
- the envelope (E) of the signal components with a positive amplitude has in each case a mean positive amplitude (M);
- the envelope (E) of the signal components with a negative amplitude has in each case a mean negative amplitude;
- the first signal section (Sa1) and/or the second signal section (Sa2) and/or the third signal section (Sa3) has/have at least one temporal range in which the envelope (E) of the signal components with a positive amplitude is between 5% and 100% greater than the mean positive amplitude and/or in which the envelope (E) of the signal components with a positive amplitude is between 5% and 90% less than the mean positive amplitude (M);
- the first signal section (Sa1) and/or the second signal section (Sa2) and/or the third signal section (Sa3) has/have at least one temporal range in which the envelope (E) of the signal components with a negative amplitude is between 5% and 100% less than the mean negative amplitude and/or in which the envelope (E) of the signal components with a negative amplitude is between 5% and 90% greater than the mean negative amplitude (M).

2. Circuit arrangement according to Claim 1,
**characterized**
**in that** the AC feed signal is a symmetrically amplitude-modulated RF signal (I_{RF}), where the absolute value of the envelope (E) of the signal components with a positive amplitude is equal to the absolute value of the envelope (E) of the signal components with a negative amplitude.

3. Circuit arrangement according to Claim 1,
**characterized**
**in that** the AC feed signal comprises:
- an RF signal (I_{RF}) with a varying or fixed amplitude, and
- an LF signal (I_{LF}) with a varying or fixed amplitude.

4. Circuit arrangement according to Claim 3,
**characterized**
**in that** the envelope (E) of the RF signal (I_{RF}) has a constant amplitude.

5. Circuit arrangement according to Claim 3,
**characterized**
**in that** the envelope (E) of the RF signal (I_{RF}) has a varying amplitude, where the variation is matched to the variation of the amplitude of the LF signal (I_{LF}).

6. Circuit arrangement according to one of the preceding claims,
**characterized**
**in that** the absolute value of the envelope (E) of at least one of the signal sections (Sa1; Sa2; Sa3) comprises a range of a first amplitude followed by at least one range of a second amplitude, where the absolute value of the second amplitude is less than the absolute value of the first amplitude.

7. Circuit arrangement according to Claim 6,
**characterized**
**in that** the second amplitude is from 50 to 90%, preferably 67%, of the first amplitude.

8. Circuit arrangement according to either of Claims 6 and 7,
**characterized**
**in that** furthermore, a range of a third amplitude is provided, with the second amplitude being from 50 to 90%, preferably 67%, and the third amplitude being from 2 to 50%, preferably 37%, of the first amplitude.

9. Circuit arrangement according to one of the preceding claims,
**characterized**
**in that** the electronic ballast comprises a control loop (38) for controlling the RF power emitted to the high-pressure discharge lamp (12).

10. Circuit arrangement according to Claim 9,
**characterized**
**in that** the control loop (38) comprises:
- an apparatus (40) for determining the actual value (P_{act}) of the RF power;
- a setpoint input apparatus (44) for inputting the setpoint value (Pₛₑₜ) for the RF power.

11. Circuit arrangement according to Claim 10,
**characterized**
**in that** the apparatus (40) for determining the actual value (P_{act}) of the RF power comprises a ring mixer or a bridge mixer.

12. Circuit arrangement according to Claim 10,
**characterized**
**in that** the apparatus (40) for determining the actual value of the RF power comprises:
- an apparatus for fixing the RF current (I₀) emitted to the high-pressure discharge lamp (12);
- an apparatus for fixing the RF voltage (U₀) present across the high-pressure discharge lamp (12); and
- an apparatus (40) for determining the actual value (P_{act}) of the RF power from the RF current (I₀) and the RF voltage (U₀), in particular by analog linking of the RF current (I₀) and the RF voltage (U₀).

13. Circuit arrangement according to Claim 12,
**characterized**
**in that** the apparatus (40) for fixing the RF current (I₀) emitted to the high-pressure discharge lamp (12) comprises a first peak-value rectifier, and the apparatus for fixing the RF voltage (U₀) present across the high-pressure discharge lamp (12) comprises a second peak-value rectifier.

14. Circuit arrangement according to one of Claims 10 to 13, **characterized**
**in that** it furthermore comprises a frequency-dependent, in particular resonant, load network (60), which provides the RF current (I₀) and the RF voltage (U₀) to the high-pressure discharge lamp (12) depending on the driving frequency (f),
the control loop (38) furthermore comprising:
- an actuator (48) for determining a change in the frequency (f) driving the load network (60) from the difference between the setpoint value (Pₛₑₜ) and the actual value (P_{act}) of the RF power.

15. Circuit arrangement according to one of Claims 10 to 14,
**characterized**
**in that** the control loop (38) is designed to implement the control in a color-specific manner, i.e. separately for at least the first, the second and the third color.

16. Circuit arrangement according to Claim 15,
**characterized**
**in that** the setpoint input apparatus (44) is designed to vary the setpoint value (Pₛₑₜ) to be input to the control loop (38) temporally corresponding to the present color.

17. Circuit arrangement according to one of Claims 10 to 16,
**characterized**
**in that** the setpoint input apparatus (44) has an interface (42), via which at least one setpoint value (Pₛₑₜ) can be changed, in particular by a user.

18. Projection apparatus (10) with a circuit arrangement according to one of the preceding claims.

19. Method for operating a high-pressure discharge lamp (12) using a circuit arrangement,
**characterized by** the following step:
driving the high-pressure discharge lamp (12) with an AC feed signal, which, in the time range as modulation period (T), comprises a serial sequence of at least one first signal section (Sa1), one second signal section (Sa2) and one third signal section (Sa3), which are associated with a first, a second and a third color, the AC feed signal being an amplitude-modulated RF signal (I_{RF}) with a frequency (f) of at least 500 kHz, where the following applies for the respective envelopes (E) of the signal components with a positive or negative amplitude:
- the envelope (E) of the signal components with a positive amplitude has in each case a mean positive amplitude;
- the envelope of the signal components with a negative amplitude has in each case a mean negative amplitude;
- the first signal section (Sa1) and/or the second signal section (Sa2) and/or the third signal section (Sa3) has/have at least one temporal range in which the envelope (E) of the signal components with a positive amplitude is between 5% and 100% greater than the mean positive amplitude and/or in which the envelope (E) of the signal components with a positive amplitude is between 5% and 90% less than the mean positive amplitude (M);
- the first signal section (Sa1) and/or the second signal section (Sa2) and/or the third signal section (Sa3) has/have at least one temporal range in which the envelope (E) of the signal components with a negative amplitude is between 5% and 100% less than the mean negative amplitude and/or in which the envelope (E) of the signal components with a negative amplitude is between 5% and 90% greater than the mean negative amplitude (M).

## Revendications

1. Montage pour faire fonctionner une lampe ( 12 ) à décharge à haute pression, avec un ballast électronique qui est conçu pour mettre à disposition de la lampe (12) à décharge à haute pression un signal d'alimentation en courant alternatif, qui comprend dans la plage de temps, en tant que période ( T ) de modulation, une succession en série d'au moins un premier ( Sa1 ), un deuxième ( Sa2 ) et un troisième segment ( Sa3 ) de signal, qui sont affectés à une première, à une deuxième et à une troisième couleur,
**caractérisé**
**en ce que** le signal d'alimentation en courant alternatif est un signal ( I_{HF} ) modulé en amplitude d'une fréquence ( f ) d'au moins 500 kHz,
dans lequel on a pour les enveloppes ( E ) respectives des parties de signal, ayant une amplitude positive ou respectivement négative :
- l'enveloppe ( E ) des parties du signal ayant une amplitude positive a respectivement une amplitude ( M ) positive médiane ;
- l'enveloppe ( E ) des parties du signal ayant une amplitude négative a respectivement une amplitude négative médiane ;
- le premier segment ( Sa1 ) de signal et/ou le deuxième segment ( Sa2 ) de signal et/ou le troisième segment ( Sa3 ) de signal a/ont au moins une plage temporelle, dans laquelle l'enveloppe ( E ) des parties du signal ayant une amplitude positive, comprise entre 5 % et 100 %, est plus grande que l'amplitude positive médiane et/ou, dans laquelle l'enveloppe des parties de signal ayant une amplitude positive, comprise entre 5 % et 90 %, est plus petite que l'amplitude ( M ) positive médiane ;
- le premier segment ( Sa1 ) de signal et/ou le deuxième segment ( Sa2 ) de signal et/ou le troisième segment ( Sa3 ) de signal a/ont au moins une plage temporelle, dans laquelle l'enveloppe ( E ) des parties de signal ayant une amplitude négative, comprise entre 5 % et 100 %, est plus petite que l'amplitude négative médiane et/ou dans laquelle l'enveloppe ( E ) des parties de signal ayant une amplitude négative, comprise entre 5 % et 90 %, est plus grande que l'amplitude ( M ) négative médiane.

2. Montage suivant la revendication 1,
**caractérisé**
**en ce que** le signal d'alimentation en courant alternatif est un signal ( I_{HF} ) ( HF ) modulé symétriquement en amplitude, dans lequel la valeur absolue des enveloppes ( E ) des parties du signal d'amplitude positive est égale à la valeur absolue des enveloppes ( E ) des parties du signal d'amplitude négative.

3. Montage suivant la revendication 1,
**caractérisé**
**en ce que** le signal d'alimentation en courant alternatif se compose :
- d'un signal ( I_{HF} ) HF d'amplitude variable ou fixe, et
- d'un signal ( I_{NF} ) BF d'amplitude variable ou fixe.

4. Montage suivant la revendication 3,
**caractérisé**
**en ce que** l'enveloppe ( E ) du signal ( I_{HF} ) HF a une amplitude constante.

5. Montage suivant la revendication 3,
**caractérisé**
**en ce que** l'enveloppe ( E ) du signal ( IHF ) HF a une amplitude variable, la variation étant adaptée à la variation de l'amplitude du signal ( I_{NF} ) BF.

6. Montage suivant l'une des revendications précédentes,
**caractérisé**
**en ce que** la valeur absolue des enveloppes ( E ) d'au moins l'un des segments ( Sa1 ; Sa2 ; Sa3 ) de signal se compose d'une plage d'une première amplitude, suivie d'au moins une plage d'une deuxième amplitude, la valeur absolue de la deuxième amplitude étant plus petite que la valeur absolue de la première amplitude.

7. Montage suivant la revendication 6,
**caractérisé**
**en ce que** la deuxième amplitude représente de 50 à 90 %, de préférence 67 % de la première amplitude.

8. Montage suivant l'une des revendications 6 ou 7,
**caractérisé**
**en ce qu'**il est prévu en outre une plage d'une troisième amplitude, la deuxième amplitude représentant de 50 à 90 %, de préférence 67 %, et la troisième amplitude de 2 à 50 %, de préférence 37 %, de la première amplitude.

9. Montage suivant l'une des revendications précédentes,
**caractérisé**
**en ce que** le ballast électronique comprend un circuit ( 38 ) de régulation de la puissance HF cédée à la lampe ( 12 ) à décharge à haute pression.

10. Montage suivant la revendication 9,
**caractérisé**
**en ce que** le circuit ( 38 ) de régulation comprend :
- un dispositif ( 40 ) de détermination de la valeur ( Pᵢₛₜ ) réelle de la puissance HF ;
- un dispositif ( 44 ) de prescription de la valeur ( Pₛₒₗₗ ) de consigne de la puissance HF.

11. Montage suivant la revendication 10,
**caractérisé**
**en ce que** le dispositif ( 40 ) de détermination de la valeur ( Pᵢₛₜ ) réelle de la puissance HF est un mélangeur annulaire ou un mélangeur à pont.

12. Montage suivant la revendication 10,
**caractérisé**
**en ce que** le dispositif ( 40 ) de détermination de la valeur réelle de la puissance HF comprend :
- un dispositif de détermination du courant ( I₀ ) HF cédé à la lampe ( 12 ) à décharge à haute pression ;
- un dispositif de détermination de la tension ( U₀ ) HF s'appliquant à la lampe ( 12 ) à décharge à haute pression ; et
- un dispositif ( 40 ) de détermination de la valeur ( Pᵢₛₜ ) réelle de la puissance HF provenant du courant ( I₀ ) HF et de la tension ( U₀ ) HF, notamment par combinaison analogique du courant ( I₀ ) HF et de la tension ( U₀ ) HF.

13. Montage suivant la revendication 12,
**caractérisé**
**en ce que** le dispositif ( 40 ) de détermination du courant ( I₀ ) HF cédé à la lampe ( 12 ) à décharge à haute pression comprend un premier redresseur de valeur de pointe, et le dispositif de détermination de la tension ( U0 ) HF appliqué à la lampe ( 12 ) à décharge à haute pression comprend un deuxième redresseur de valeur de pointe.

14. Montage suivant l'une des revendications 10 à 13,
**caractérisé**
**en ce qu'**il comprend en outre un réseau ( 60 ) de charge, qui dépend de la fréquence, notamment résonant, qui met à disposition, en fonction de la fréquence ( f ) de commande, le courant ( I₀ ) HF et la tension ( U₀ ) HF sur la lampe ( 12 ) à décharge à haute pression,
dans lequel le circuit ( 38 ) de régulation comprend en outre :
- un élément ( 48 ) de réglage, pour déterminer une variation de la fréquence ( f ) commandant le réseau ( 60 ) de charge, à partir de la différence entre la valeur ( Pₛₒₗₗ ) de consigne et la valeur ( Pᵢₛₜ ) réelle de la puissance HF.

15. Montage suivant l'une des revendications 10 à 14,
**caractérisé**
**en ce que** le circuit ( 38 ) de régulation est conçu pour effectuer la régulation d'une manière spécifique à la couleur, c'est-à-dire séparément, pour au moins la première, la deuxième et la troisième couleur.

16. Montage suivant la revendication 15,
**caractérisé**
**en ce que** le dispositif ( 44 ) de prescription d'une valeur de consigne est conçu pour faire varier la valeur ( Pₛₒₗₗ) de consigne à prescrire au circuit ( 38 ) de régulation dans le temps, en fonction de la couleur instantanée.

17. Montage suivant l'une des revendications 10 à 16,
**caractérisé**
**en ce que** le dispositif ( 44 ) de prescription d'une valeur de consigne a une interface ( 42 ), par laquelle au moins une valeur ( Pₛₒₗₗ ) de consigne peut être modifiée, notamment par un utilisateur.

18. Dispositif ( 10 ) de projection ayant un montage suivant l'une des revendications précédentes.

19. Procédé pour faire fonctionner une lampe ( 12 ) à décharge à haute pression sur un montage, **caractérisé par** le stade suivant :
on commande la lampe ( 12 ) à décharge à haute pression, par un signal d'alimentation en courant alternatif, qui comprend dans la plage de temps, en tant que période ( T ) de modulation, une succession en série d'au moins un premier ( Sa1 ), un deuxième ( Sa2 ) et un troisième segment ( Sa3 ) de signal, qui sont affectés à une première, à une deuxième et à une troisième couleur, le signal d'alimentation en courant alternatif étant un signal ( I_{HF} ) HF modulé en amplitude d'une fréquence ( f ) d'au moins 500 kHz, dans lequel on a pour les enveloppes ( E ) respectives des parties du signal ayant une amplitude positive ou respectivement négative :
- l'enveloppe ( E ) des parties du signal d'amplitude positive a respectivement une amplitude positive médiane ;
- l'enveloppe des parties du signal d'amplitude négative a respectivement une amplitude négative médiane ;
- le premier segment ( Sa1 ) de signal et/ou le deuxième segment ( Sa2 ) de signal et/ou le troisième segment ( Sa3 ) de signal a/ont au moins une plage temporelle, dans lesquelles l'enveloppe ( E ) des parties du signal d'amplitude positive, comprise entre 5 % et 100 %, est plus grande que l'amplitude médiane et/ou dans lesquelles la valeur absolue des enveloppes ( E ), comprise entre 5 % et 90 %, est plus petite que l'amplitude médiane des parties du signal d'amplitude positive ;
- le premier segment ( Sa1 ) de signal et/ou le deuxième segment ( Sa2 ) de signal et/ou le troisième segment ( Sa3 ) de signal ont au moins une plage temporelle, dans lesquelles l'enveloppe ( E ) des parties de signal ayant une amplitude négative, comprise entre 5 % et 100 %, est plus petite que l'amplitude négative médiane et/ou dans lesquelles, l'enveloppe ( E ) des parties de signal ayant une amplitude négative, comprise entre 5 % et 90 % est plus grande que l'amplitude ( M ) négative médiane.
